(19) Europäisches Patentamt
European Patent Office
Office européen des brevets

(11) **EP 4 134 576 B1**

(12) **EUROPÄISCHE PATENTSCHRIFT**

(45) Veröffentlichungstag und Bekanntmachung des Hinweises auf die Patenterteilung:
**01.10.2025   Patentblatt 2025/40**

(21) Anmeldenummer: **21191276.1**

(22) Anmeldetag: **13.08.2021**

(51) Internationale Patentklassifikation (IPC):
**F16K 37/00** $^{(2006.01)}$

(52) Gemeinsame Patentklassifikation (CPC):
**F16K 37/005**

(54) **COMPUTERIMPLEMENTIERTES VERFAHREN ZUM BETREIBEN EINES ABSPERRORGANS FÜR EIN FLUID UND EIN ENTSPRECHENDES ABSPERRORGAN**

COMPUTER-IMPLEMENTED METHOD FOR OPERATING A FLUID SHUT-OFF DEVICE AND A CORRESPONDING SHUT-OFF DEVICE

PROCÉDÉ DE MISE EN  OEUVRE PAR ORDINATEUR DESTINÉ AU FONCTIONNEMENT D'UN ÉLÉMENT D'ARRÊT POUR UN FLUIDE ET ÉLÉMENT D'ARRÊT CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**15.02.2023   Patentblatt 2023/07**

(73) Patentinhaber: **FOCUS-ON V.O.F.**
**3313 LC Dordrecht (NL)**

(72) Erfinder:
• **HOGENDOORN, Cornelis Johannes**
**4211 BG Spijk (NL)**
• **VAN CASPEL, Stefan**
**3046 NM Rotterdam (NL)**

(74) Vertreter: **Gesthuysen Patentanwälte**
**Partnerschaftsgesellschaft mbB**
**Huyssenallee 68**
**45128 Essen (DE)**

(56) Entgegenhaltungen:
**JP-A- S5 913 185**

• **HAN MINGXING ET AL: "A numerical investigation in characteristics of flow force under cavitation state inside the water hydraulic poppet valves", INTERNATIONAL JOURNAL OF HEAT AND MASS TRANSFER, ELSEVIER, AMSTERDAM, NL, vol. 111, 2 April 2017 (2017-04-02), pages 1 - 16, XP085016814, ISSN: 0017-9310, DOI: 10.1016/ J.IJHEATMASSTRANSFER.2017.03.100**
• **JIN HAOZHE ET AL: "Failure analysis of a high pressure differential regulating valve in coal liquefaction", ENGINEERING FAILURE ANALYSIS, PERGAMON, GB, vol. 55, 21 May 2015 (2015-05-21), pages 115 - 130, XP029263258, ISSN: 1350-6307, DOI: 10.1016/ J.ENGFAILANAL.2015.05.004**

EP 4 134 576 B1

**Beschreibung**

Die Erfindung betrifft ein computerimplementiertes Verfahren zum Betreiben eines Absperrorgans für ein Fluid, mit einem das Fluid führenden Gehäuse, mit einer in dem Gehäuse vorgesehenen Einströmöffnung für das Fluid und mit einer in dem Gehäuse vorgesehenen Ausströmöffnung für das Fluid, mit einem in dem Gehäuse zwischen der Einströmöffnung und der Ausströmöffnung ausgebildeten Strömungskanal für das Fluid, mit einer in dem Strömungskanal angeordneten Sperrvorrichtung mit einem einstellbaren Strömungsquerschnitt für das Fluid in der Sperrvorrichtung und damit im Strömungskanal und mit einer Steuer- und Auswerteeinheit zur Ansteuerung der Sperrvorrichtung und zur Erfassung von Zustandsgrößen des Absperrorgans. Darüber hinaus betrifft die Erfindung auch ein entsprechendes Absperrorgan, mit dem es möglich ist, das computerimplementierte Verfahren zu realisieren.

Absperrorgane für Fluide, im Wesentlichen also für gasförmige oder flüssige Medien, sind seit langer Zeit in ganz unterschiedlicher technischer Ausführungen im Einsatz, sei es in prozesstechnischen Anlagen (z. B. Lebensmittelindustrie, Chemie, Erdölverarbeitung), in Gebäudeinstallationen und beispielsweise auch in der Medizintechnik, in der Fahrzeugtechnik einschließlich Luft- und Raumfahrt. Die Sperrvorrichtungen der Absperrorgane weisen üblicherweise eine Sperrkörperaufnahme und einen in der Sperrkörperaufnahme beweglichen Sperrkörper auf, wobei durch Bewegen des Sperrkörpers in der Sperrkörperaufnahme der Strömungsquerschnitt für das Fluid in der Sperrvorrichtung und damit im Strömungskanal veränderbar ist.

Die Sperrvorrichtungen der Absperrorgane werden häufig automatisiert angesteuert, um den Mengenstrom des durch das Absperrorgan fließenden Fluids im Rahmen einer übergeordneten Steuerung oder Regelung einzustellen. Die Sperrvorrichtung bzw. der Sperrkörper der Sperrvorrichtung wird dann durch eine elektrisch, hydraulische oder pneumatisch angetriebene Stellvorrichtung bewegt. Durch Auslenkung des Sperrkörpers in der Sperrkörperaufnahme des Absperrorgans wird der Strömungsquerschnitt im Bereich der Sperrvorrichtung variiert und mit ihm der Strömungswiderstand, sodass der gewünschte Effekt der Einstellung eines Mengen- oder Volumenstroms erzielt wird. Aus dem vorher Gesagten ergibt sich, dass ein Absperrorgan hier nicht als eine Vorrichtung zu verstehen ist, die einen Strömungsweg entweder vollständig schließt oder vollständig öffnet. Vielmehr kann der Strömungsweg für das Fluid kontinuierlich beeinflusst werden, sodass das Absperrorgan als Strömungs- oder auch Druckregler arbeitet.

Wie bei anderen fluidtechnischen Anwendungen ist das Auftreten von Kavitationen innerhalb der hier betrachteten Absperrorgane problematisch. Kavitation ist der Effekt auftretender Gasblasen innerhalb des Fluids in Bereichen geringen statischen Fluiddrucks, nämlich dann, wenn der statische Fluiddruck unter den Dampfdruck des Fluids absinkt. Bereiche geringen statischen Fluiddrucks liegen typischerweise dort vor, wo Konstruktionsteile von dem Fluid mit hoher Geschwindigkeit umströmt werden. Wenn der Fluiddruck wieder über den Dampfdruck des Fluids ansteigt, kommt es zu einer Blasenimplosion mit erheblichen lokalen Druckspitzen, die in der Nähe befindliche Konstruktionselemente, hier also mechanische Elemente des Absperrorgans, schädigen können. JPS5913185A offenbart ein Verfahren zum Betreiben einer Absperrvorrichtung für ein Fluid und zum Erkennen von Kavitation sowie eine entsprechende Absperrvorrichtung.

Aufgabe der vorliegenden Erfindung ist es daher, das Auftreten von Kavitationsereignissen innerhalb des Absperrorgans besser erkennbar zu machen.

Die zuvor hergeleitete Aufgabe ist bei dem eingangs beschriebenen Verfahren zum Betreiben eines Absperrorgans für ein Fluid dadurch gelöst, dass zunächst mit einem mathematischen Modell der aktuelle statische Fluiddruck an einem interessierenden Ort innerhalb des Absperrorgans in Abhängigkeit von wenigstens einer gemessenen Zustandsgröße des Fluids berechnet wird. Damit ist gemeint, dass das betreffende mathematische Modell auch nur dazu in der Lage ist, den statischen Fluiddruck an diesem interessierenden Ort zu berechnen und nicht ganz allgemeingültig an einem beliebigen Ort in dem Absperrorgan. Durch diese Einschränkung lässt sich generell das mathematische Modell extrem vereinfachen. Der interessierende Ort muss für die Erstellung des mathematischen Modells vorher festgelegt werden. Bei der Überlegung, was ein sinnvoller interessierender Ort in dem Absperrorgan ist, können im Vorfeld andere Hilfsmittel herangezogen werden, beispielsweise Methoden der numerischen Strömungsmechanik (Computational Fluid Dynamics, CFD). Mit diesen Methoden lassen sich die strömungstechnisch interessierenden Größen sehr genau in der Geometrie des Absperrorgans ermitteln, und zwar in Abhängigkeit von bestimmten Randbedingungen, wie beispielsweise dem eingestellten Strömungsquerschnitt, der Art des Fluids, dem Druck an der Einströmöffnung, der Strömungsgeschwindigkeit, der Temperatur des Fluids usw. Ist der interessierende Ort gefunden, beispielsweise in der Nähe von empfindlichen Konstruktionselementen oder generell in Bereichen konstruktiv bedingter geringer statischen Fluiddrücke, kann das verwendete mathematische Modell lediglich auf diesen interessierenden Ort - oder auf eine begrenzte Anzahl interessierender Orte - abgestimmt werden. Die Vorauswahl des interessierenden Ortes - oder der begrenzten Anzahl interessierender Orte - macht das mathematische Modell zur Bestimmung des statischen Fluiddrucks an diesem interessierenden Ort prinzipbedingt einfach, da eine 0Abhängigkeit von Ortskoordinaten entfällt.

Zu dem Verfahren gehört auch, dass der Dampfdruck des Fluids ermittelt wird, insbesondere natürlich an dem interessierenden Ort, für den auch der aktuelle statische Fluiddruck berechnet wird. Es kann sein, dass der Dampfdruck überall in dem Absperrorgan als gleich angenommen wird und beispielsweise nur von der Temperatur des Fluids abhängt.

Darauf kommt es im Detail nicht an. Die Ermittlung des Dampfdrucks des Fluids kann beispielsweise auch bestehen in der Entgegennahme einer von extern stammenden Informationen, der Dampfdruck kann aber auch ermittelt werden indem beispielsweise ein tabellarischer Zusammenhang zwischen der Temperatur des Fluids und dem Dampfdruck des Fluids in der Steuer- und Auswerteeinheit abgelegt ist und entsprechend der gemessenen Temperatur des Fluids der Dampfdruck des Fluids ermittelt wird.

Der aktuelle statische Fluiddruck wird mit einem von dem Dampfdruck des Fluids abhängigen Kavitationsgrenzwert verglichen. In dem Fall der Unterschreitung des Kavitationsgrenzwertes durch den berechneten aktuellen statischen Druck wird dann das Vorliegen oder das erwartete Vorliegen von Kavitation am interessierenden Ort des Absperrorgans signalisiert. Es kann also eine entsprechende Information in der Steuer- und Auswerteeinheit abgelegt werden, es kann ein entsprechendes Signal über eine Datenschnittstelle des Absperrorgans nach außen mitgeteilt werden, beispielsweise an eine Leitstelle usw. Durch das Signalisieren des Vorliegens oder des erwarteten Vorliegens eines Kavitationsereignisses ist es möglich, aktiv in den Strömungsprozess einzugreifen, um so die Kavitation zu beenden, es ist möglich, durch Protokollieren der Kavitationsereignisse eine Abschätzung über den Zustand des Absperrorgans zu treffen, es kann nicht nur auf den Zustand des Absperrorgans rückgeschlossen werden, die Information über das Vorliegen von Kavitation kann auch herangezogen werden zur Erfassung des Zustandes der Strömungsumgebung, in die das Absperrorgan eingebunden ist. Die Möglichkeiten der Auswertung eines signalisierten Kavitationsereignisses sind weitreichend, die Signalisierung einer Kavitation hat für den Verwender des Absperrorgans einen erheblichen Mehrwert.

In einem bevorzugten Ausführungsbeispiel wird als der interessierende Ort innerhalb des Absperrorgans der Ort des strömungstechnisch bedingten niedrigsten statischen Fluiddrucks gewählt. Dieser kann beispielsweise im Vorfeld der Erstellung des mathematischen Modells über eine nummerische Strömungssimulation ermittelt werden. Der Vorteil besteht darin, dass auf das tatsächliche Vorkommen eines Kavitationsereignisses geschlossen wird, da der Ermittlung des Kavitationsereignisses die niedrigste physikalische Schwelle zugrunde liegt. Bei den hier betrachteten Absperrorganen findet sich dieser Ort häufig in der Nähe des einstellbaren Strömungsquerschnittes der Sperrvorrichtung, unter anderem weil hier die höchsten Strömungsgeschwindigkeiten vorliegen. Insoweit ist bei einer weiteren bevorzugten Ausgestaltung des Verfahrens bzw. des Absperrorgans vorgesehen, dass der interessierende Ort innerhalb des Absperrorgans im Strömungsquerschnitt für das Fluid in der Sperrvorrichtung liegt. Häufig liegt in der Nähe des Strömungsquerschnitts der Sperrvorrichtung tatsächlich auch der Ort des strömungstechnisch bedingten niedrigsten statischen Fluiddrucks, jedoch kann auch ein Ort gewählt werden, der in größerer Nähe zu den beteiligten mechanischen Elementen des Absperrorgans liegt und daher dort auftretende Kavitation ein höheres Schadpotenzial hat als früher auftretende Kavitation an anderen Orten.

Eine weitere bevorzugte Ausgestaltung zeichnet sich dadurch aus, dass der von dem Dampfdruck des Fluids abhängige Kavitationsgrenzwert der Dampfdruck des Fluids selbst ist, es wird also punktgenau auf das niedrigstschwellige Eintreten der Kavitation geprüft. Wenn der Kavitationsgrenzwert anders gewählt wird, kann demnach zum Beispiel auch auf ein kurz bevorstehendes - aber noch nicht eingetretenes - Kavitationsereignis getestet werden.

Die erfindungsgemäße Ausgestaltung des Verfahrens bzw. des Absperrorgans zeichnet sich dadurch aus, dass das mathematische Modell auf der Bernoulli-Gleichung beruht und die gemessene Zustandsgröße ein Fluiddruck innerhalb des Absperrorgans und eine Strömungsgeschwindigkeit des Fluids innerhalb des Absperrorgans ist. Die Bernoulli-Gleichung beruht auf der Anwendung der Energieerhaltung entlang eines Strömungsfadens innerhalb eines strömenden Fluids. Es hat sich herausgestellt, dass bei einer vereinfachten Betrachtung der Geometrie des Absperrorgans bzw. des Strömungskanals des Absperrorgans die Bernoulli-Gleichung sehr vorteilhaft und auf einfache Weise angewendet werden kann. Die einzelnen Terme der Bernoulli-Gleichung lassen sich mit vergleichsweise geringem Rechenaufwand bestimmen, sodass das hier beschriebene Verfahren mit der üblichen hardwaremäßigen Rechnerausstattung des Absperrorgans durchgeführt werden kann, also beispielsweise mit einem Mikrocontroller oder einem digitalen Signalprozessor. Den konstruktiven Gegebenheiten des jeweiligen Absperrorgans, das mit dem hier beschriebenen Verfahren betrieben wird, wird in der Bernoulli-Gleichung mit wenigstens einem Korrekturfaktor Rechnung getragen, der insbesondere vor den quadratischen Termen der Strömungsgeschwindigkeiten sinnvoll eingesetzt wird. Ein weiteres bevorzugtes Ausführungsbeispiel ist dadurch gekennzeichnet, dass das mathematische Modell und die Verfahrensschritte mit der Steuer- und Auswerteeinheit berechnet und durchgeführt werden. Alternativ werden die Verfahrensschritte auf einer Recheneinheit außerhalb des Absperrorgans berechnet und durchgeführt. Die erfassten Werte der erforderlichen Zustandsgrößen werden über einen Kommunikationskanal von dem Absperrorgan zu der externen Recheneinheit übertragen.

Wie schon mehrfach ausgeführt, wird die eingangs hergeleitete Aufgabe ebenfalls gelöst bei einem Absperrorgan für ein Fluid, mit einem das Fluid führenden Gehäuse, mit einer in dem Gehäuse vorgesehenen Einströmöffnung für das Fluid und mit einer in dem Gehäuse vorgesehenen Ausströmöffnung für das Fluid, mit einem in dem Gehäuse zwischen der Einströmöffnung und der Ausströmöffnung ausgebildeten Strömungskanal für das Fluid, mit einer in dem Strömungskanal angeordneten Sperrvorrichtung mit einem einstellbaren Strömungsquerschnitt für das Fluid in der Sperrvorrichtung und damit im Strömungskanal und mit einer Steuer- und Auswerteeinheit zur Ansteuerung der Sperrvorrichtung und zur Erfassung von Zustandsgrößen des Absperrorgans, zu denen auch die Zustandsgrößen des in dem Absperrorgan fließenden Fluids gehören.

Die hergeleitete Aufgabe wird bei dem zuvor beschriebenen Absperrorgan dadurch gelöst, dass die Steuer- und Auswerteeinheit mit einem mathematischen Modell den aktuellen statischen Fluiddruck an einem interessierenden Ort innerhalb des Absperrorgans in Abhängigkeit von wenigstens einer gemessenen Zustandsgröße des Fluids berechnet, dass die Steuer- und Auswerteeinheit den Dampfdruck des Fluids ermittelt, dass die Steuer- und Auswerteeinheit den aktuellen statischen Fluiddruck mit einem von dem Dampfdruck des Fluids abhängigen Kavitationsgrenzwert vergleicht und dass die Steuer- und Auswerteeinheit in dem Fall der Unterschreitung des Kavitationsgrenzwertes durch den berechneten aktuellen statischen Fluiddruck das Vorliegen oder das erwartete Vorliegen von Kavitation am interessierenden Ort des Absperrorgans signalisiert.

Die Steuer- und Auswerteeinheit ist insgesamt so ausgestaltet und hergerichtet, dass sie die zuvor beschriebenen Verfahrensschritte für sich alleine genommen oder im Zusammenspiel ausführen kann.

Eine Weiterentwicklung des Absperrorgans zeichnet sich dadurch aus, dass mit jeweils einem Drucksensor der einströmseitige Mediumdruck und ausströmseitige Mediumdruck erfasst werden und dass eine Strömungsgeschwindigkeit des Mediums im Strömungskanal mit einem Strömungskanal erfasst wird, insbesondere mit einem Strömungssensor auf Basis mit Ultraschallwellen.

Wie erläutert, gibt es verschiedene Möglichkeiten, das erfindungsgemäße Verfahren und das erfindungsgemäße Absperrorgan auszugestalten und weiterzubilden, wie es in den, den unabhängigen Patentansprüchen nachgeordneten Patentansprüchen beschrieben ist. Bevorzugte Ausführungsbeispiele werden nachfolgend anhand der Zeichnung beschrieben. In der Zeichnung zeigen:

Fig. 1     schematisch ein erstes Ausführungsbeispiel eines erfindungsgemäßen Absperrorgans,

Fig. 2     schematisch ein weiteres Ausführungsbeispiel eines erfindungsgemäßen Absperrorgans und

Fig. 3     schematisch ein erfindungsgemäßes Verfahren zum Betreiben eines Absperrorgans.

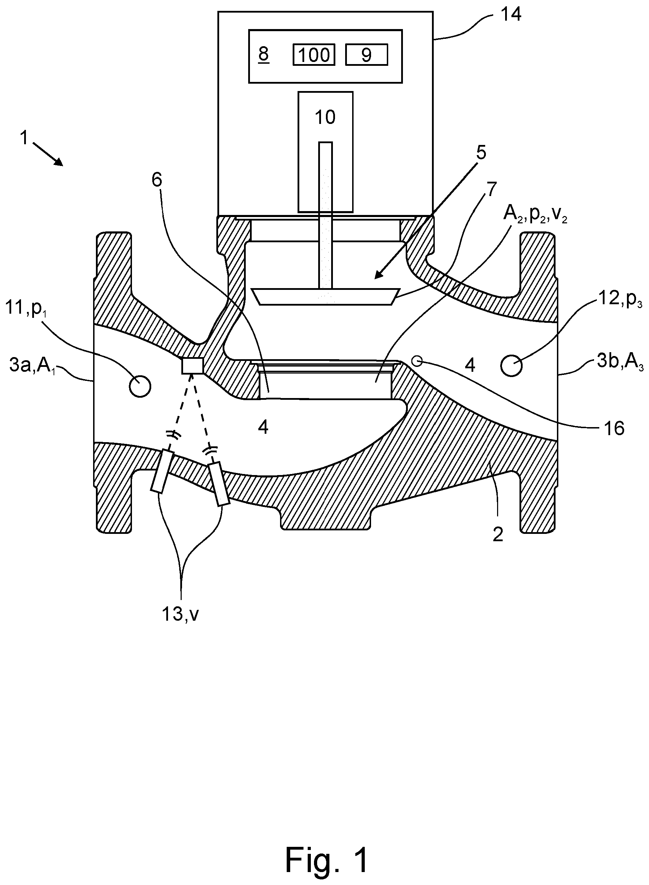

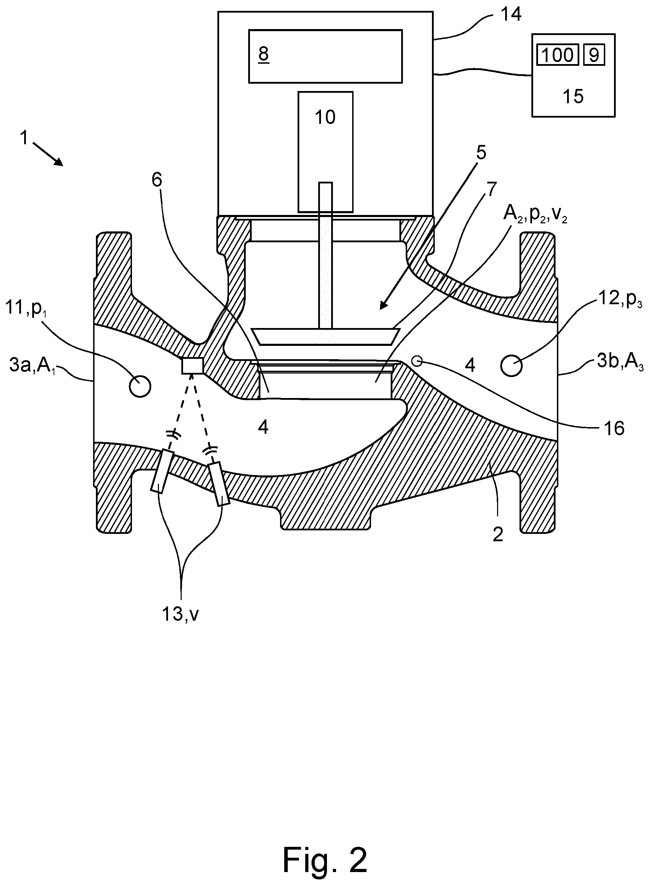

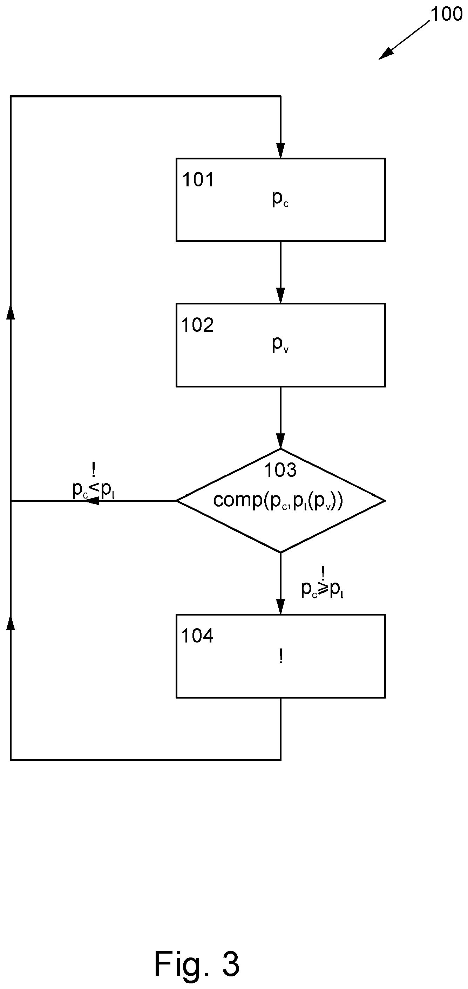

In den Fig. 1 bis 3 ist jeweils schematisch ein computerimplementiertes Verfahren 100 zum Betreiben eines Absperrorgans 1 für ein Fluid dargestellt. In den Fig. 1 und 2 liegt der Schwerpunkt auf der gegenständlichen Darstellung des Absperrorgans 1, in der Fig. 3 liegt der Schwerpunkt auf der schematischen Darstellung des computerimplementierten Verfahrens 100.

In den Fig. 1 und 2 ist zu erkennen, dass das Absperrorgan 1 ein das Fluid führendes Gehäuse 2 aufweist mit einer in dem Gehäuse 2 vorgesehenen Einströmöffnung 3a mit einem Querschnitt $A_1$ für das Fluid und mit einer in dem Gehäuse 2 vorgesehenen Ausströmöffnung 3b mit einem Querschnitt $A_3$ für das Fluid. In dem Gehäuse 2 ist zwischen der Einströmöffnung 3a und der Ausströmöffnung 3b ein Strömungskanal 4 für das Fluid ausgebildet. In dem Strömungskanal 4 ist eine Sperrvorrichtung 5 mit einem einstellbaren Strömungsquerschnitt $A_2$ für das Fluid angeordnet. Die Sperrvorrichtung 5 wird hier realisiert durch eine Sperrkörperaufnahme 6 und einen Sperrkörper 7. Durch Auslenkung des Sperrkörpers 7 mittels eines Stellantriebs 10 kann der Strömungsquerschnitt $A_2$ für das Fluid variiert werden. Befindet sich der Sperrkörper 7 in der Sperrkörperaufnahme 6, ist der Strömungsquerschnitt $A_2$ für das Fluid geschlossen, der Strömungswiderstand demzufolge am Höchsten, ist der Sperrkörper 7 komplett zurückgefahren, ist der Strömungsquerschnitt $A_2$ für das Fluid maximal freigegeben und der Strömungswiderstand für das Fluid demzufolge am Geringsten. Auf die genaue Ausgestaltung der Sperrvorrichtung 5 kommt es hier jedoch nicht an, sie könnte auch anders umgesetzt sein, beispielsweise als Absperrschieber, Absperrklappe oder als Kugelhahn.

Das Absperrorgan 1 umfasst ferner eine Steuer- und Auswerteeinheit 8 zur Ansteuerung der Sperrvorrichtung 5 und zur Erfassung von Zustandsgrößen des Absperrorgans 1 und des in dem Absperrorgan 1 strömenden Fluids.

Mit dem in den Fig. 1 bis 3 dargestellten Verfahren 100 zum Betreiben des Absperrorgans 1 und mit dem entsprechenden Absperrorgan 1 ist es auf einfache Weise möglich, das Auftreten oder auch das bevorstehende Auftreten von Kavitation innerhalb des Absperrorgans 1 zu erkennen.

Das in den Fig. 1 bis 3 dargestellte Verfahren 100 zum Betreiben des Absperrorgans 1 und das entsprechende Absperrorgan 1 zeichnen sich zunächst dadurch aus, dass mit einem mathematischen Modell 9 der aktuelle statische Fluiddruck $p_c$ an einem interessierenden Ort 16 innerhalb des Absperrorgans 1 in Abhängigkeit von wenigstens einer gemessenen Zustandsgröße des Fluids berechnet 101 wird. Das mathematische Modell ist also so gewählt, dass es nur in der Lage ist, den aktuellen statischen Fluiddruck $p_c$ an einem bestimmten Ort - oder an einer begrenzten Anzahl vorbestimmter, also festgelegter Orte -, möglicherweise auch an wenigen vorbestimmten festen Orten, zu berechnen, was das mathematische Modell 9 in jedem Fall einfach macht gegenüber einem Modell, das in Abhängigkeit von Ortskoordinaten als Eingangsgrößen an einem beliebigen Ort in dem Absperrorgan 1 den statischen Fluiddruck $p_v$ berechnen kann.

Darüber hinaus wird der Dampfdruck $p_v$ des Fluids ermittelt 102. In welcher Reihenfolge die Verfahrensschritte 101 und 102 durchgeführt werden, ist unerheblich.

Schließlich wird der aktuelle statische Fluiddruck $p_c$ mit einem von dem Dampfdruck $p_v$ des Fluids abhängigen Kavitationsgrenzwert $p_l$ verglichen 103, in Fig. 3 angedeutet durch den Ausdruck comp($p_c$, $p_l(p_v)$) in Verfahrensschritt 103. In dem Fall der Unterschreitung des von dem Dampfdruck $p_v$ des Fluids abhängigen Kavitationsgrenzwertes $p_l$ durch den berechneten aktuellen statischen Druck $p_c$ wird das Vorliegen oder das erwartete Vorliegen von Kavitation am interessierenden Ort 16 des Absperrorgans 1 signalisiert 104, was in Fig. 3 durch das Ausrufezeichen in Verfahrensschritt 104 symbolisiert wird.

Bei den Ausführungsbeispielen in den den Fig. 1 und 2 ist als der interessierende Ort 16 innerhalb des Absperrorgans 1 der Ort des strömungstechnisch bedingten niedrigsten statischen Fluiddrucks gewählt worden. Dieser interessierende Ort 16 ist im Vorfeld durch eine numerische strömungstechnische Berechnung ausfindig gemacht worden. Gleichzeitig befindet sich der interessierende Ort 16 in der Nähe des Strömungsquerschnitts für das Fluid in der Sperrvorrichtung 5. Dort auftretende Kavitation ist aufgrund der Nähe zu konstruktiven Teilen der Sperrvorrichtung 5 auch potenziell schädigend. In Abhängigkeit von der Geometrie des Absperrorgans 1 oder von dem Schweregrad der Kavitation kann der interessierende Ort auch an anderer Stelle angesiedelt sein.

In den hier dargestellten Ausführungsbeispielen ist der von dem Dampfdruck $p_v$ des Fluids abhängig Kavitationsgrenzwert $p_l$ der Dampfdruck $p_v$ des Fluids selbst, sodass also auf das tatsächliche Auftreten von Kavitation getestet wird und nicht auf ein zu erwartendes Kavitationsereignis, wenn der aktuelle statische Fluiddruck $p_c$ noch weiter abfallen sollte.

Bei dem mathematischen Modell 9 kann es sich um eine im mathematischen Sinne analytische Beschreibung der physikalischen Zusammenhänge handeln, beispielsweise in Form einer aus der Systemtheorie bekannten Zustandsraumdarstellung von Zustandsgrößen des Absperrorgans. Die Zusammenhänge zur Ermittlung des statischen Fluiddrucks $p_c$ müssen aber nicht unbedingt analytisch erfasst sein, sie können beispielsweise auch in Form von tabellarischen Kennfeldern erfasst sein, als ein neuronales Netz oder in Form von anderen Beschreibungsvarianten, die aus der mathematischen Modellbildung physikalischer Systeme bekannt sind.

Die erfindungsgemäße Variante des mathematischen Modells 9 beruht auf der Bernoulli-Gleichung, die die Energieerhaltung entlang eines Strömungspfades beschreibt (Glg. 1):

$$p + \rho h g + \frac{1}{2}\rho v^2 = \text{const}$$

Es gehen ein die spezifische Druck- und Lageenergie sowie die spezifische kinetische Energie. $\rho$ ist die Dichte des Fluids. Bei Vorliegen eines relevanten Strömungswiderstandes muss ein über die Länge des betrachteten Strömungspfades resultierender Druckverlust berücksichtigt werden (Glg. 2):

$$p_1 - p_2 = \rho g(h_2 - h_1) + \frac{1}{2}\rho(v_2^2 - v_1^2) + \Delta p$$

$\Delta p$ ist die Druckdifferenz über den betrachteten Strömungspfad, sie entspricht also der Druckdifferenz $p_1$ - $p_3$, wenn sich der Strömungspfad über die gesamte Länge des Absperrorgans 1 erstreckt. Verläuft der Strömungspfad auf einer gravitativen Äquipotenzialfläche, entfällt der diesbezügliche Term mit der Höhendifferenz $h_2$ - $h_1$.

Es hat sich herausgestellt, dass die tatsächlichen strömungstechnischen Gegebenheiten in dem Absperrorgan 1 durch eine stark vereinfachte geometrische Betrachtung unter Anwendung vereinfachender Annahmen sehr gut annäherbar sind. Die recht komplizierte Geometrie des Strömungskanals 4 des Absperrorgans 1 wird vereinfacht betrachtet als ein linearer Strömungsverlauf beginnend mit der Einströmöffnung 3a (mit dem Strömungsquerschnitt $A_1$ und dem Druck $p_1$ und der Strömungsgeschwindigkeit $v_1$), über die Engstelle in der Sperrvorrichtung 5 (mit dem Strömungsquerschnitt $A_2$, dem dort herrschenden Druck $p_2$ und der Strömungsgeschwindigkeit $v_2$), bishin zur Ausströmöffnung 3b (mit dem Strömungsquerschnitt $A_3$, dem dort herrschenden Druck $p_3$ und der Strömungsgeschwindigkeit $v_3$).

Wie oben bereits ausgeführt, interessiert bei den dargestellten Ausführungsbeispielen der Druck $p_2$ im Strömungsquerschnitt der Sperrvorrichtung 5, da auf den niedrigsten statischen Fluiddruck geprüft werden soll, der nach einer zuvor durchgeführten strömungstechnischen Untersuchung im Strömungsquerschnitt der Sperrvorrichtung 5 vorliegt. Der Druck $p_2$ ist also der aktuelle statische Fluiddruck $p_c$ an dem interessierenden Ort 16, also im - oder nahe dem - Strömungsquerschnitt der Sperrvorrichtung 5. Dies vorausgeschickt, kann Glg. 2 wie folgt umgeschrieben werden (Glg. 3):

$$p_c = p_1 + \alpha \frac{1}{2}\rho_l\, v_1^2 - \beta \frac{1}{2}\rho_l\, v_2^2 - \Delta p$$

Der $\alpha$-Term in Gleichung 3 kann offensichtlich für den Fall, dass die Geschwindigkeit $v_2$ sehr viel größer ist als die Geschwindigkeit $v_1$, wegfallen.

Die hier vorkommenden Zustandsgrößen des Absperrorgans 1 können auf verschiedene Art und Weise bestimmt werden. Sie können direkt gemessen werden, teilweise können sie aber auch mittelbar bestimmt werden. Beispielsweise ist es nicht erforderlich, die Strömungsgeschwindigkeit $v_2$ im Strömungsquerschnitt $A_2$ der Sperrvorrichtung 5 zu messen, wenn die Strömungsgeschwindigkeit $v_1$ schon - durch Messung - bekannt ist und der Strömungsquerschnitt $A_2$ in der Sperrvorrichtung 5 auch bekannt ist, weil die Stellposition des Sperrkörpers 7 eine bekannte Zustandsgröße ist. Dies wird nachfolgend erläutert. Die Bernoulli-Gleichung gemäß Glg. 3 ist mit zwei Korrekturfaktoren $\alpha$, $\beta$ versehen, die der Anpassung der Bernoulli-Gleichung an die konstruktive Ausgestaltung des Absperrorgans 1 dienen. Diese Korrekturfaktoren können im Rahmen von Kalibriermessungen für einen Typ von Absperrorganen 1 bestimmt werden, beispielsweise durch bekannte statistische Verfahren der Kurvenanpassung, oder durch Berechnungen auf Basis der numerischen Strömungsmechanik.

Die Korrekturfaktoren $\alpha$, $\beta$ sind im vorliegenden Fall abhängig von der Zustandsgröße der Strömungsgeschwindigkeit des Fluids innerhalb des Absperrorgans 1, wobei insbesondere der Umschlag zwischen laminarer und turbulenter Strömung eine Rolle spielt.

Bei dem hier dargestellten einfachen Ansatz zur gleichungsmäßigen Beschreibung eines mathematischen Modells 9 des Absperrorgans 1 werden zunächst die Strömungs- und Druckverhältnisse betrachtet vom einströmseitigen Querschnitt $A_1$ hin zu dem Querschnitt $A_2$ in der variablen Engstelle der Sperrvorrichtung 5, und dann werden die Strömungs- und Druckverhältnisse betrachtet vom Querschnitt $A_2$ in der variablen Engstelle der Sperrvorrichtung 5 zum ausströmseitigen Querschnitt $A_3$. Der Strömungsquerschnitt $A_2$ hängt von der Stellposition des Sperrkörpers 7 ab und damit von seiner Beabstandung zu der Sperrkörperaufnahme 6. Für die beiden Abschnitte, also von der Einströmseite bis zur Sperrvorrichtung 5 und von der Sperrvorrichtung 5 zur Ausströmseite können die Druckverlustbeiwerte K wie folgt angegeben werden (Gleichungen 4 und 5):

$$K_{1\to 2} = 0.5\left(1 - \frac{A_2}{A_1}\right)$$

$$K_{2\to 3} = \left(1 - \frac{A_2}{A_3}\right)^2$$

Der Druckverlust in den beiden vorgenannten Abschnitten kann unter Verwendung der zuvor aufgezeigten Druckverlustbeiwerte wie folgt formuliert werden (Gleichungen 6 und 7):

$$p_1 - p_2 = K_{1\to 2}\frac{1}{2}\rho_l v_2{}^2 = 0.5\left(1 - \frac{A_2}{A_1}\right)\frac{1}{2}\rho_l v_2{}^2$$

$$p_2 - p_3 = K_{2\to 3}\frac{1}{2}\rho_l v_2{}^2 = \left(1 - \frac{A_2}{A_3}\right)^2\frac{1}{2}\rho_l v_2{}^2$$

Hier bezeichnen $p_1$, $p_2$ und $p_3$ die Drücke im Einströmbereich, in der Sperrvorrichtung 5 und im Ausströmbereich 3b. $\rho_1$ ist die Dichte des Fluids und v ist die Strömungsgeschwindigkeit. Bei den hier aufgezeigten Zusammenhängen wird von einem inkompressiblen Fluid ausgegangen. Der Vollständigkeit halber wird darauf hingewiesen, dass entsprechende Zusammenhänge ohne Weiteres auch für kompressible Fluide formuliert werden können. Durch Addition der Gleichungen 6 und 7 zur Beschreibung des Druckabfalls und unter der Annahme, dass der Einströmquerschnitt $A_1$ gleich dem Ausströmquerschnitt $A_3$ ist, werden folgende Zusammenhänge unter Eliminierung von $p_2$ erhalten (Gleichungen 8 bis 10):

$$(p_1 - p_2) + (p_2 - p_3) = \frac{1}{2}\rho_l v_2^2 \cdot 0.5\left(1 - \frac{A_2}{A_1}\right) + \frac{1}{2}\rho_l v_2^2 \cdot \left(1 - \frac{A_2}{A_3}\right)^2$$

$$(p_1 - p_3) = \frac{1}{2}\rho_l v_2^2 \cdot \left(0.5\left(1 - \frac{A_2}{A_1}\right) + \left(1 - \frac{A_2}{A_1}\right)^2\right)$$

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

Der Strömungsquerschnitt $A_2$ ist abhängig von der Ventilstellung und kann einfach durch Kenntnis der Stellposition des Sperrkörpers 7 ermittelt werden.

In Fig. 1 ist dargestellt, dass das mathematische Modell 9 in der Steuer- und Auswerteeinheit 8 in einer Gehäuseergänzung 14 - Transmittergehäuse - abgelegt ist und demzufolge wird auch dort das computerimplementierte Verfahren 100 ausgeführt. Die Steuer- und Auswerteeinheit 8 ist üblicherweise ein eingebetteter Rechner auf Basis eines Mikrocontrollers oder eines digitalen Signalprozessors. Auf die genaue technische Ausführung kommt es hier nicht an. Die Lösung bei der Ausgestaltung in Fig. 2 weicht davon ab. Hier ist das mathematische Modell 9 in einer externen Recheneinheit 15 abgelegt, beispielsweise in einem Prozessleitsystem. Die erfassten Zustandsgrößen werden hier von der Steuer- und Auswerteeinheit 8 zu der externen Recheneinheit 15 über ein Feldbus übermittelt, wobei die weitergehenden Verfahrensschritte dann in der externen Recheneinheit 15 ausgeführt werden.

Als Zustandsgrößen des Absperrorgans 1 werden der einströmseitige Mediumdruck $p_1$, der über den einströmseitigen Drucksensor 11 erfasst wird, der ausströmseitige Mediumdruck $p_3$, der über den ausströmseitigen Drucksensor 12 erfasst wird, und eine Strömungsgeschwindigkeit v des Mediums im Strömungskanal 4, die über Ultraschallsensoren 13 über eine Laufzeitmessung erfasst wird, gemessen. Die Strömungsgeschwindigkeit v könnte auch mittels Gleichung 10 berechnet werden, d. h. sie muss nicht zwingend gemessen werden. Bei inkompressiblen Fluiden kann die im Querschnitt der Messung der Strömungsgeschwindigkeit v ermittelte Strömungsgeschwindigkeit v sehr einfach auf jeden anderen Querschnitt im Strömungskanal 4 umgerechnet werden. Die Sensoren sind in den Fig. 1 und 2 nur schematisch angedeutet. Zur Wahrung der Übersichtlichkeit ist auch keine Verkabelung zwischen den Sensoren und der der Steuer- und Auswerteeinheit 8 dargestellt. Die Druckdifferenz $\Delta p$ könnte auch berechnet werden anhand von Gleichung 10. Durch die zusätzliche Messung von $p_3$ ergibt sich eine Redundanz, die zu Diagnosezwecken herangezogen werden kann.

**Bezugs- und Formelzeichen**

| | |
|---|---|
| 1 | Absperrorgan |
| 2 | Gehäuse |
| 3a | Einströmöffnung |
| 3b | Ausströmöffnung |
| 4 | Strömungskanal |
| 5 | Sperrvorrichtung |
| 6 | Sperrkörperaufnahme |
| 7 | Sperrkörper |
| 8 | Steuer- und Auswerteeinheit |
| 9 | mathematisches Modell |
| 10 | Stellantrieb |
| 11 | einströmseitiger Drucksensor |
| 12 | ausströmseitiger Drucksensor |
| 13 | Ultraschallsensoren |
| 14 | Gehäuseergänzung |
| 15 | externe Recheneinheit |
| 16 | interessierender Ort im Strömungskanal des Absperrorgans |
| 100 | Computerimplementiertes Verfahren |
| 101 | Berechnen eines aktuellen statischen Fluiddrucks |
| 102 | Ermitteln des Dampfdrucks des Fluids |
| 103 | Vergleich des aktuellen statischen Fluiddrucks mit einem von dem Dampfdruck des Fluids abhängigen Kavitationsgrenzwert |
| 104 | Signalisieren der Unterschreitung eines Kavitationsgrenzwertes durch den statischen Fluiddruck |
| $p_c$ | berechneter statischer Fluiddruck |
| $p_v$ | ermittelter Dampfdruck des Fluids |
| $p_1$ | Kavitationsgrenzwert |
| $p_1$ | einströmseitiger Druck |
| $p_2$ | Druck im Strömungsquerschnitt der Sperrvorrichtung |
| $p_3$ | ausströmseitiger Druck |

$A_1$, $A_3$     einströmseitiger und ausströmseitiger Strömungsquerschnitt

$A_2$        Strömungsquerschnitt in der Sperrvorrichtung

$K_1$, $K_2$     Druckverlustbeiwerte

$\rho_1$        Dichte des Fluids

**Patentansprüche**

1. Computerimplementiertes Verfahren (100) zum Betreiben eines Absperrorgans (1) für ein Fluid, mit einem das Fluid führenden Gehäuse (2), mit einer in dem Gehäuse (2) vorgesehenen Einströmöffnung (3a) für das Fluid und mit einer in dem Gehäuse (2) vorgesehenen Ausströmöffnung (3b) für das Fluid, mit einem in dem Gehäuse (2) zwischen der Einströmöffnung (3a) und der Ausströmöffnung (3b) ausgebildeten Strömungskanal (4) für das Fluid, mit einer in dem Strömungskanal (4) angeordneten Sperrvorrichtung (5) mit einem einstellbaren Strömungsquerschnitt für das Fluid in der Sperrvorrichtung (5) und damit im Strömungskanal (4) und mit einer Steuer- und Auswerteeinheit (8) zur Ansteuerung der Sperrvorrichtung (5) und zur Erfassung von Zustandsgrößen des Absperrorgans (1), wobei mit einem mathematischen Modell (9) der aktuelle statische Fluiddruck ($p_c$) an einem interessierenden Ort (16) innerhalb des Absperrorgans (1) in Abhängigkeit von wenigstens einer gemessenen Zustandsgröße des Fluids berechnet (101) wird, wobei der Dampfdruck ($p_v$) des Fluids ermittelt (102) wird, wobei der aktuelle statische Fluiddruck ($p_c$) mit einem von dem Dampfdruck ($p_v$) des Fluids abhängigen Kavitationsgrenzwert ($p_1$) verglichen (103) wird, wobei in dem Fall der Unterschreitung des von dem Dampfdruck ($p_v$) des Fluids abhängigen Kavitationsgrenzwertes ($p_1$) durch den berechneten aktuellen statischen Fluiddruck ($p_c$) das Vorliegen oder erwartete Vorliegen von Kavitation am interessierenden Ort (16) des Absperrorgans (1) signalisiert (104) wird,

   wobei das mathematische Modell (9) auf der Bernoulli-Gleichung beruht und die gemessene Zustandsgröße ein Fluiddruck ($p_1$, $p_2$, $p_3$) innerhalb des Absperrorgans (1) und/oder eine Strömungsgeschwindigkeit ($v_1$, $v_2$, $v_3$) des Fluids innerhalb des Absperrorgans (1) ist,
   wobei die Bernoulli-Gleichung mit wenigstens einem Korrekturfaktor $\alpha$, $\beta$ versehen ist zur Anpassung der Bernoulli-Gleichung an die konstruktive Ausgestaltung des Absperrorgans (1), und wobei das auf der Bernoulli-Gleichung beruhende mathematische Modell (9) die folgende Form hat:

$$p_c = p_1 + \alpha \frac{1}{2} \rho_l \, v_1^2 - \beta \frac{1}{2} \rho_l \, v_2^2 - \Delta p$$

   wobei $\rho l$ die Dichte des Fluids ist,
   wobei die Geometrie des Strömungskanals (4) des Absperrorgans (1) vereinfacht betrachtet wird als ein linearer Strömungsverlauf beginnend mit der Einströmöffnung (3a) mit einem Strömungsquerschnitt (A1) und einem Druck (p1) und einer Strömungsgeschwindigkeit (v1), über die Engstelle in der Sperrvorrichtung (5) mit einem Strömungsquerschnitt (A2), einem dort herrschenden Druck (p2) und einer Strömungsgeschwindigkeit (v2), bis hin zur Ausströmöffnung (3b) mit einem Strömungsquerschnitt (A3), einem dort herrschenden Druck (p3) und einer Strömungsgeschwindigkeit (v3),
   wobei $\Delta p$ die Druckdifferenz (p1 - p3) über den betrachteten Strömungspfad ist, und wobei der Druck (p2) der aktuelle statische Fluiddruck (pc) an dem interessierenden Ort (16) ist.

2. Verfahren (100) nach Anspruch **1, dadurch gekennzeichnet, dass** der interessierende Ort (16) innerhalb des Absperrorgans (1) der Ort des strömungstechnisch bedingten niedrigsten statischen Fluiddrucks ($p_c$) ist.

3. Verfahren (100) nach Anspruch 1 oder 2, **dadurch gekennzeichnet, dass** der interessierende Ort (16) innerhalb des Absperrorgans (1) im Strömungsquerschnitt für das Fluid in der Sperrvorrichtung (5) liegt.

4. Verfahren (100) nach einem der Ansprüche 1 bis 3, **dadurch gekennzeichnet, dass** der von dem Dampfdruck ($p_v$) des Fluids abhängige Kavitationsgrenzwert ($p_1$) der Dampfdruck ($p_v$) des Fluids selbst ist.

5. Verfahren (100) nach einem der Ansprüche 1 bis 4, **dadurch gekennzeichnet, dass** der Korrekturfaktor $\alpha$, $\beta$ abhängig ist von einer Zustandsgröße des Fluids, insbesondere wobei die Zustandsgröße eine Strömungsge-schwindigkeit ($v_1$, $v_2$, $v_3$) des Fluids innerhalb des Absperrorgans (1) ist.

6. Verfahren (100) nach einem der Ansprüche 1 bis 5, **dadurch gekennzeichnet, dass** die Strömungsgeschwindigkeit $v_1$ durch Messung bestimmt wird, insbesondere durch Ultraschallmessung, und/oder die Strömungsgeschwindigkeit

$v_1$ berechnet wird in Abhängigkeit von gemessenen Drücken im Absperrorgan (1), insbesondere unter Verwendung des folgenden Zusammenhangs

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

7. Verfahren (100) nach einem der Ansprüche 1 bis 6, **dadurch gekennzeichnet, dass** das mathematische Modell (9) und die Verfahrensschritte mit der Steuer- und Auswerteeinheit (8) berechnet und durchgeführt werden oder dass das mathematische Modell (9) und die Verfahrensschritte auf einer Recheneinheit (15) außerhalb des Absperrorgans (1) berechnet und durchgeführt werden und die erfassten Werte der Zustandsgrößen über einen Kommunikationskanal von dem Absperrorgan (1) zu der externen Recheneinheit (15) übertragen werden.

8. Absperrorgan (1) für ein Fluid, mit einem das Fluid führenden Gehäuse (2), mit einer in dem Gehäuse (2) vorgesehenen Einströmöffnung (3a) für das Fluid und mit einer in dem Gehäuse (2) vorgesehenen Ausströmöffnung (3b) für das Fluid, mit einem in dem Gehäuse (2) zwischen der Einströmöffnung (3a) und der Ausströmöffnung (3b) ausgebildeten Strömungskanal (4) für das Fluid, mit einer in dem Strömungskanal (4) angeordneten Sperrvorrichtung (5) mit einem einstellbaren Strömungsquerschnitt für das Fluid in der Sperrvorrichtung (5) und damit im Strömungskanal (4) und mit einer Steuer- und Auswerteeinheit (8) zur Ansteuerung der Sperrvorrichtung (5) und zur Erfassung von Zustandsgrößen des Absperrorgans (1), wobei die Steuer- und Auswerteeinheit (8) mit einem mathematischen Modell (9) den aktuellen statische Fluiddruck ($p_c$) an einem interessierenden Ort (16) innerhalb des Absperrorgans (1) in Abhängigkeit von wenigstens einer gemessenen Zustandsgröße des Fluids berechnet (101), wobei die Steuer- und Auswerteeinheit (8) den Dampfdruck ($p_v$) des Fluids ermittelt (102), wobei die Steuer- und Auswerteeinheit (8) den aktuellen statischen Fluiddruck ($p_c$) mit einem von dem Dampfdruck ($p_v$) des Fluids abhängigen Kavitationsgrenzwert ($p_1$) vergleicht (103), wobei die Steuer- und Auswerteeinheit (8) in dem Fall der Unterschreitung des Kavitationsgrenzwertes ($p_1$) durch den berechneten aktuellen statischen Fluiddruck ($p_c$) das Vorliegen oder erwartete Vorliegen von Kavitation am interessierenden Ort (16) des Absperrorgans (1) signalisiert (104), wobei das mathematische Modell (9) auf der Bernoulli-Gleichung beruht und die gemessene Zustandsgröße ein Fluiddruck ($p_1$, $p_2$, $p_3$) innerhalb des Absperrorgans (1) und/oder eine Strömungsgeschwindigkeit ($v_1$, $v_2$, $v_3$) des Fluids innerhalb des Absperrorgans (1) ist, **dadurch gekennzeichnet, dass** die Bernoulli-Gleichung mit wenigstens einem Korrekturfaktor $\alpha$, $\beta$ versehen ist zur Anpassung der Bernoulli-Gleichung an die konstruktive Ausgestaltung des Absperrorgans (1), und dass das auf der Bernoulli-Gleichung beruhende mathematische Modell (9) die folgende Form hat:

$$p_c = p_1 + \alpha\frac{1}{2}\rho_l v_1^2 - \beta\frac{1}{2}\rho_l v_2^2 - \Delta p$$

wobei $\rho l$ die Dichte des Fluids ist,
wobei die Geometrie des Strömungskanals (4) des Absperrorgans (1) vereinfacht betrachtet wird als ein linearer Strömungsverlauf beginnend mit der Einströmöffnung (3a) mit einem Strömungsquerschnitt (A1) und einem Druck (p1) und einer Strömungsgeschwindigkeit (v1), über die Engstelle in der Sperrvorrichtung (5) mit einem Strömungsquerschnitt (A2), einem dort herrschenden Druck (p2) und einer Strömungsgeschwindigkeit (v2), bis hin zur Ausströmöffnung (3b) mit einem Strömungsquerschnitt (A3), einem dort herrschenden Druck (p3) und einer Strömungsgeschwindigkeit (v3),
wobei $\Delta p$ die Druckdifferenz (p1 - p3) über den betrachteten Strömungspfad ist, und wobei der Druck (p2) der aktuelle statische Fluiddruck (pc) an dem interessierenden Ort (16) ist.

9. Absperrorgan (1) nach Anspruch 8, **dadurch gekennzeichnet, dass** die Steuer- und Auswerteeinheit (8) so ausgestaltet und eingerichtet ist, dass sie die Verfahrensschritte (101, 102, 203, 104) des Kennzeichnungsteils wenigstens eines Anspruchs der Ansprüche 2 bis 7 durchführen kann.

10. Absperrorgan (1) nach Anspruch 8 oder 9, **dadurch gekennzeichnet, dass** mit einem Drucksensor (11) der einströmseitige Mediumdruck ($p_1$) und mit einem Drucksensor (12) der ausströmseitige Mediumdruck ($p_3$) erfasst wird.

11. Absperrorgan (1) nach einem der Ansprüche 8 bis 10, **dadurch gekennzeichnet, dass** eine Strömungsgeschwindigkeit (v) des Mediums im Strömungskanal (4) mit einem Strömungssensor (13) erfasst wird, insbesondere mit einem Strömungssensor (13) auf Basis von Ultraschallwellen, und/oder die Strömungsgeschwindigkeit (v) berechnet wird in Abhängigkeit von gemessenen Drücken im Absperrorgan (1), insbesondere unter Verwendung des folgenden Zusammenhangs

$$\Delta p = \tfrac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

**Claims**

1. Computer-implemented method (100) for operating a shut-off device (1) for a fluid, with a housing (2) conducting the fluid, with an inflow opening (3a) for the fluid, which opening is provided in the housing (2) and with an outflow opening (3b) for the fluid, which opening is provided in the housing (2), with a flow channel (4) formed in the housing (2) for the fluid between the inflow opening (3a) and the outflow opening (3b), and with a blocking device (5) arranged in the flow channel (4) with an adjustable flow cross-section for the fluid in the blocking device (5) and thus in the flow channel (4) and with a control and evaluation unit (8) for actuating the blocking device (5) and for acquiring state variables of the shut-off device (1),

    wherein a mathematical model (9) is used to calculate (101) the current static fluid pressure ($p_c$) at a location of interest (16) within the shut-off device (1) as a function of at least one measured state variable of the fluid,
    wherein the vapor pressure ($p_v$) of the fluid is determined (102),
    wherein the current static fluid pressure ($p_c$) is compared (103) with a cavitation limit value ($p_l$) which is dependent on the vapor pressure ($p_v$) of the fluid,
    wherein, in the event of the calculated current static fluid pressure (pc) falling below the cavitation limit value ($p_l$) dependent on the vapor pressure ($p_v$) of the fluid, the presence or expected presence of cavitation at the location of interest (16) of the shut-off device (1) is signaled (104),
    wherein the mathematical model (9) is based on Bernoulli's equation and the measured state variable is a fluid pressure ($p_1$, $p_2$, $p_3$) within the shut-off device (1) and/or a flow velocity ($v_1$, $v_2$, $v_3$) of the fluid within the shut-off device (1),
    wherein the Bernoulli equation is provided with at least one correction factor ($\alpha$, $\beta$) for adapting the Bernoulli equation to the constructive design of the shut-off device (1),
    and wherein the mathematical model (9) based on Bernoulli's equation has the following form:

$$p_c = p_1 + \alpha\frac{1}{2}\rho_l v_1^2 - \beta\frac{1}{2}\rho_l v_2^2 - \Delta p$$

    wherein $\rho_l$ is the density of the fluid,
    wherein the geometry of the flow channel (4) of the shut-off device (1) is considered in simplified form as a linear flow path beginning with the inflow opening (3a) with a flow cross-section ($A_1$) and a pressure ($p_1$) and a flow velocity ($v_1$), via the constriction in the blocking device (5) with a flow cross-section ($A_2$), a pressure ($p_2$) prevailing there and a flow velocity ($v_2$), up to the outflow opening (3b) with a flow cross-section ($A_3$), a pressure ($p_3$) prevailing there and a flow velocity ($v_3$),
    wherein $\Delta p$ is the pressure difference ($p_1$ - $p_3$) over the flow path under consideration,
    and wherein the pressure ($p_2$) is the current static fluid pressure ($p_c$) at the location of interest (16).

2. Method (100) according to claim 1, **characterized in that** the location of interest (16) within the shut-off device (1) is the location of the fluidic lowest static fluid pressure ($p_c$).

3. Method (100) according to claim 1 or 2, **characterized in that** the location of interest (16) is within the shut-off device (1) in the flow cross-section for the fluid in the blocking device (5).

4. Method (100) according to any one of claims 1 to 3, **characterized in that** the cavitation limit value (pl) dependent on the vapor pressure ($p_v$) of the fluid is the vapor pressure ($p_v$) of the fluid itself.

5. Method (100) according to any one of claims 1 to 4, **characterized in that** the correction factor ($\alpha$, $\beta$) is dependent on a state variable of the fluid, in particular wherein the state variable is a flow velocity ($v_1$, $v_2$, $v_3$) of the fluid within the shut-off device (1).

6. Method (100) according to any one of claims 1 to 5, **characterized in that** the flow velocity $v_1$ is either determined by measurement, especially by ultrasonic measurement, and/or that the flow velocity $v_1$ is calculated in dependency on measured pressures in the shut-off device (1), especially using the following relationship:

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

7. Method (100) according to any one of claims 1 to 6, **characterized in that** the mathematical model (9) and the method steps are calculated and carried out with the control and evaluation unit (8), or **in that** the mathematical model (9) and the method steps are calculated and carried out on a computing unit (15) external to the shut-off device (1), and the detected values of the state variables are transmitted from the shut-off device (1) to the external computing unit (15) via a communication channel.

8. Shut-off device (1) for a fluid, with a housing (2) conducting the fluid, with an inflow opening (3a) for the fluid, which opening is provided in the housing (2) and with an outflow opening (3b) for the fluid, which opening is provided in the housing (2), with a flow channel (4) formed in the housing (2) for the fluid between the inflow opening (3a) and the outflow opening (3b), and with a blocking device (5) arranged in the flow channel (4) with an adjustable flow cross-section for the fluid in the blocking device (5) and thus in the flow channel (4) and with a control and evaluation unit (8) for actuating the blocking device (5) and for acquiring state variables of the shut-off device (1),

> wherein the control and evaluation unit (8) uses a mathematical model (9) to calculate (101) the current static fluid pressure ($p_c$) at a location of interest (16) within the shut-off device (1) in dependence on at least one measured state variable of the fluid,
> wherein the control and evaluation unit (8) determines (102) the vapor pressure ($p_v$) of the fluid,
> wherein the control and evaluation unit (8) compares (103) the current static fluid pressure ($p_c$) with a cavitation limit value (pl) which is dependent on the vapor pressure ($p_v$) of the fluid,
> wherein the control and evaluation unit (8) signals (104) the presence or expected presence of cavitation at the point of interest (16) of the shut-off device (1) in the case of the calculated current static fluid pressure ($p_c$) falling below the cavitation limit value ($p_l$),
> wherein the mathematical model (9) is based on Bernoulli's equation and the measured state variable is a fluid pressure ($p_1$, $p_2$, $p_3$) within the shut-off device (1) and/or a flow velocity ($v_1$, $v_2$, $v_3$) of the fluid within the shut-off device (1),
> **characterized in**
> **that** the Bernoulli equation is provided with at least one correction factor ($\alpha$, $\beta$) for adapting the Bernoulli equation to the constructive design of the shut-off device (1),
> and **that** the mathematical model (9) based on Bernoulli's equation has the following form:

$$p_c = p_1 + \alpha\frac{1}{2}\rho_l v_1^2 - \beta\frac{1}{2}\rho_l v_2^2 - \Delta p$$

> wherein $\rho_l$ is the density of the fluid,
> wherein the geometry of the flow channel (4) of the shut-off device (1) is considered in simplified form as a linear flow path beginning with the inflow opening (3a) with a flow cross-section ($A_1$) and a pressure ($p_1$) and a flow velocity ($v_1$), via the constriction in the blocking device (5) with a flow cross-section ($A_2$), a pressure ($p_2$) prevailing there and a flow velocity ($v_2$), up to the outflow opening (3b) with a flow cross-section ($A_3$), a pressure ($p_3$) prevailing there and a flow velocity ($v_3$),
> wherein $\Delta p$ is the pressure difference ($p_1$ - $p_3$) over the flow path under consideration,
> and wherein the pressure ($p_2$) is the current static fluid pressure ($p_c$) at the location of interest (16).

9. Shut-off device (1) according to claim 8, **characterized in that** the control and evaluation unit (8) is designed and arranged such that it can carry out the method steps (101, 102, 203, 104) of the characterizing portion of at least any one of claims 2 to 7.

10. Shut-off device (1) according to claim 8 or 9, **characterized in that** the medium pressure ($p_1$) on the inflow side is acquired by a pressure sensor (11) and the medium pressure ($p_3$) on the outflow side is acquired by a pressure sensor (12).

11. Shut-off device (1) according to one of the claims 8 to 10 **characterized in that** a flow velocity (v) of the medium in the flow channel (4) is acquired by a flow sensor (13), in particular by a flow sensor (13) based on ultrasonic waves, and/or the flow velocity (v) is calculated in dependency of measured pressures in the shut-off device (1), especially by using the following relationship:

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

## Revendications

1. Procédé mis en œuvre par ordinateur (100) permettant de faire fonctionner un élément d'arrêt (1) pour un fluide, comprenant un boîtier (2) conduisant le fluide, une ouverture d'entrée (3a) pour le fluide, prévue dans le boîtier (2), et une ouverture de sortie (3b) pour le fluide, prévue dans le boîtier (2), un canal d'écoulement (4) pour le fluide, réalisé dans le boîtier (2) entre l'ouverture d'entrée (3a) et l'ouverture de sortie (3b), un dispositif de blocage (5) ayant une section transversale réglable, disposé dans le canal d'écoulement (4), pour le fluide dans le dispositif de blocage (5) et donc dans le canal d'écoulement (4), et une unité de commande et d'évaluation (8) pour piloter le dispositif de blocage (5) et pour détecter des grandeurs d'état de l'élément d'arrêt (1), dans lequel un modèle mathématique (9) permet de calculer (101) la pression de fluide statique ($p_c$) actuelle à un endroit d'intérêt (16) à l'intérieur de l'élément d'arrêt (1) en fonction d'au moins une grandeur d'état mesurée du fluide, dans lequel la pression de vapeur ($p_v$) du fluide est déterminée (102), la pression de fluide statique ($p_c$) actuelle étant comparée (103) avec une valeur limite de cavitation ($p_l$) dépendant de la pression de vapeur ($p_v$) du fluide, dans lequel, en cas de soupassement de la valeur limite de cavitation ($p_l$) dépendant de la pression de vapeur ($p_v$) du fluide, la présence ou la présence attendue d'une cavitation à l'endroit d'intérêt (16) de l'élément d'arrêt (1) est signalée (104) par la pression de fluide statique ($p_c$) actuelle calculée,

   dans lequel le modèle mathématique (9) est basé sur l'équation de Bernoulli, et la grandeur d'état mesurée est une pression de fluide ($p_1$, $p_2$, $p_3$) à l'intérieur de l'élément d'arrêt (1) et/ou une vitesse d'écoulement ($v_1$, $v_2$, $v_3$) du fluide à l'intérieur de l'élément d'arrêt (1), dans lequel l'équation de Bernoulli est munie d'au moins un facteur de correction $\alpha$, $\beta$ pour adapter l'équation de Bernoulli à la configuration constructive de l'élément d'arrêt (1), et dans lequel le modèle mathématique (9) basé sur l'équation de Bernoulli présente la forme suivante :

$$p_c = p_1 + \alpha \frac{1}{2}\rho_l v_1^2 - \beta \frac{1}{2}\rho_l v_2^2 - \Delta p$$

   où $\rho l$ est la densité du fluide,
   dans lequel la géométrie du canal d'écoulement (4) de l'élément d'arrêt (1) est considérée de manière simplifiée comme un tracé d'écoulement linéaire commençant par l'ouverture d'entrée (3a) ayant une section transversale d'écoulement (A1) et une pression (p1) et une vitesse d'écoulement (v1), en passant par l'étranglement dans le dispositif de blocage (5) ayant une section transversale (A2), une pression (p2) qui y règne et une vitesse d'écoulement (v2) jusqu'à l'ouverture de sortie (3b) ayant une section transversale d'écoulement (A3), une pression (p3) qui y règne et une vitesse d'écoulement (v3),
   dans lequel $\Delta p$ est la différence de pression (p1 - p3) sur le trajet d'écoulement considéré, et dans lequel la pression (p2) est la pression de fluide statique (pc) actuelle à l'endroit d'intérêt (16).

2. Procédé (100) selon la revendication 1, **caractérisé en ce que** l'endroit d'intérêt (16) à l'intérieur de l'élément d'arrêt (1) est l'endroit ayant la pression fluidique statique ($p_c$) la plus basse pour des raisons fluidiques.

3. Procédé (100) selon la revendication 1 ou 2, **caractérisé en ce que** l'endroit d'intérêt (16) à l'intérieur de l'élément d'arrêt (1) se trouve dans la section transversale d'écoulement pour le fluide dans le dispositif de blocage (5).

4. Procédé (100) selon l'une quelconque des revendications (1 à 3), **caractérisé en ce que** la valeur limite de cavitation ($p_l$) dépendant de la pression de vapeur ($p_v$) du fluide est la pression de vapeur ($p_v$) du fluide lui-même.

5. Procédé (100) selon l'une quelconque des revendications 1 à 4, **caractérisé en ce que** le facteur de correction $\alpha$, $\beta$ dépend d'une grandeur d'état du fluide, en particulier dans lequel la grandeur d'état est une vitesse d'écoulement ($v_1$,

v$_2$, v$_3$) du fluide à l'intérieur de l'élément d'arrêt (1).

6. Procédé (100) selon l'une quelconque des revendications 1 à 5, **caractérisé en ce que** la vitesse d'écoulement v$_1$ est déterminée par une mesure, en particulier par une mesure par ultrasons, et/ou la vitesse d'écoulement v$_1$ est calculée en fonction des pressions mesurées dans l'élément d'arrêt (1), en particulier par l'utilisation de la relation suivante

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

7. Procédé (100) selon l'une quelconque des revendications 1 à 6, **caractérisé en ce que** le modèle mathématique (9) et les étapes de procédé sont calculés et exécutés par l'unité de commande et d'évaluation (8), ou **en ce que** le modèle mathématique (9) et les étapes de procédé sont calculés et exécutés sur une unité de calcul (15) à l'extérieur de l'élément d'arrêt (1), et les valeurs détectées des grandeurs d'état sont transmises par l'intermédiaire d'un canal de communication de l'élément d'arrêt (1) à l'unité de calcul externe (15).

8. Elément d'arrêt (1) pour un fluide, comprenant un boîtier (2) conduisant le fluide, une ouverture d'entrée (3a) pour le fluide, prévue dans le boîtier (2), et une ouverture de sortie (3b) pour le fluide, prévue dans le boîtier (2), un canal d'écoulement (4) pour le fluide, réalisé dans le boîtier (2) entre l'ouverture d'entrée (3a) et l'ouverture de sortie (3b), un dispositif de blocage (5) ayant une section transversale réglable, disposé dans le canal d'écoulement (4), pour le fluide dans le dispositif de blocage (5) et donc dans le canal d'écoulement (4), et une unité de commande et d'évaluation (8) pour piloter le dispositif de blocage (5) et pour détecter des grandeurs d'état de l'élément d'arrêt (1), dans lequel l'unité de commande et d'évaluation (8) calcule (101) avec un modèle mathématique (9) la pression de fluide statique (p$_c$) actuelle à un endroit d'intérêt (16) à l'intérieur de l'élément d'arrêt (1) en fonction d'au moins une grandeur d'état mesurée du fluide, dans lequel l'unité de commande et d'évaluation (8) détermine (102) la pression de vapeur (p$_v$) du fluide, dans lequel l'unité de commande et d'évaluation (8) compare (103) la pression de fluide statique (p$_c$) actuelle avec une valeur limite de cavitation (p$_l$) dépendant de la pression de vapeur (p$_v$) du fluide, dans lequel l'unité de commande et d'évaluation (8), en cas de soupassement de la valeur limite de cavitation (p$_l$) par la pression de fluide statique (p$_c$) actuelle calculée, signale (104) la présence ou la présence attendue d'une cavitation à l'endroit d'intérêt (16) de l'élément d'arrêt (1), dans lequel le modèle mathématique (9) est basé sur l'équation de Bernoulli, et la grandeur d'état mesurée est une pression de fluide (p$_1$, p$_2$, p$_3$) à l'intérieur de l'élément d'arrêt (1) et/ou une vitesse d'écoulement (v$_1$, v$_2$, v$_3$) du fluide à l'intérieur de l'élément d'arrêt (1), **caractérisé en ce que** l'équation de Bernoulli est munie d'au moins un facteur de correction α, β pour adapter l'équation de Bernoulli à la configuration constructive de l'élément d'arrêt (1), et **en ce que** le modèle mathématique (9) basé sur l'équation de Bernoulli présente la forme suivante :

$$p_c = p_1 + \alpha \frac{1}{2}\rho_l\, v_1^2 - \beta \frac{1}{2}\rho_l\, v_2^2 - \Delta p$$

où ρl est la densité du fluide,
dans lequel la géométrie du canal d'écoulement (4) de l'élément d'arrêt (1) est considérée de manière simplifiée comme un tracé d'écoulement linéaire commençant par l'ouverture d'entrée (3a) ayant une section transversale d'écoulement (A1) et une pression (p1) et une vitesse d'écoulement (v1), en passant par l'étranglement dans le dispositif de blocage (5) ayant une section transversale (A2), une pression (p2) qui y règne et une vitesse d'écoulement (v2) jusqu'à l'ouverture de sortie (3b) ayant une section transversale d'écoulement (A3), une pression (p3) qui y règne et une vitesse d'écoulement (v3),
dans lequel Δp est la différence de pression (p1 - p3) sur le trajet d'écoulement considéré, et dans lequel la pression (p2) est la pression de fluide statique (pc) actuelle à l'endroit d'intérêt (16).

9. Elément d'arrêt (1) selon la revendication 8, **caractérisé en ce que** l'unité de commande et d'évaluation (8) est configurée et conçue de telle sorte qu'elle peut exécuter les étapes de procédé (101, 102, 203, 104) de la partie caractérisante d'au moins une revendication parmi les revendications 2 à 7.

10. Elément d'arrêt (1) selon la revendication 8 ou 9, **caractérisé en ce qu'**un capteur de pression (11) permet de détecter la pression de milieu côté entrée (p$_1$), et un capteur de pression (12) permet de détecter la pression de milieu côté sortie (p$_3$).

11. Elément d'arrêt (1) selon l'une quelconque des revendications 8 à 10, **caractérisé en ce qu'**une vitesse d'écoulement (v) du milieu dans le canal d'écoulement (4) est détectée par un capteur d'écoulement (13), en particulier par un capteur d'écoulement (13) à base d'ondes ultrasonores, et/ou la vitesse d'écoulement (v) est calculée en fonction des pressions mesurées dans l'élément d'arrêt (1), en particulier en utilisant la relation suivante

$$\Delta p = \frac{1}{2}\rho_l v_1^2 \cdot \left(\frac{A_1}{A_2}\right)^2 \left(0.5\left(1 - \frac{A_2}{A_1}\right) + \left(1 - \frac{A_2}{A_1}\right)^2\right)$$

Fig. 1

Fig. 2

Fig. 3

**EP 4 134 576 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP S5913185 A